# EUROPÄISCHE PATENTSCHRIFT

(11) **EP 0 719 240 B1**
(45) Veröffentlichungstag und Bekanntmachung des Hinweises auf die Patenterteilung: **23.12.1998**
(21) Anmeldenummer: 95911292.1
(22) Anmeldetag: 04.03.1995
(51) Int. Cl.: C03B 7/12

(54) **ABTRENNVORRICHTUNG FÜR POSTEN VON GLASSTRÄNGEN**
DEVICE FOR SEVERING GOBS FROM STRANDS OF MOLTEN GLASS
DISPOSITIF PERMETTANT DE SECTIONNER DES PARAISONS DE JONCS DE VERRE

(30) Priorität: 16.07.1994 DE 9411572 U
(43) Veröffentlichungstag der Anmeldung: 03.07.1996
(73) Patentinhaber: FIRMA HERMANN HEYE, D-31682 Obernkirchen (DE)
(72) Erfinder: BÖGERT, Hermann, D-31749 Auetal (DE); GEISEL, Gerhard, D-31675 Bückeburg (DE)
(74) Vertreter: Kosel, Peter, Dipl.-Ing.
(86) Internationale Anmeldenummer: EP9500799
(87) Internationale Veröffentlichungsnummer: WO9602472

(56) Entgegenhaltungen:
- DE-B- 2 705 527

## Beschreibung

Die Erfindung betrifft eine Vorrichtung nach dem Oberbegriff des Anspruchs 1.

Bei einer bekannten Vorrichtung dieser Art (DE-C1-41 32 098) sind die Schwenkbewegungen der beiden Scherenarme durch ein Getriebe miteinander synchronisiert. Die Schwenkbewegungen erfolgen durch Antreiben nur eines ersten der Scherenarme durch einen Antrieb. Der Antrieb weist eine Kurbel auf, deren Kurbelzapfen über eine Koppelstange mit dem ersten Scherenarm verbunden ist. Der Antrieb ist auf einem Schlitten angeordnet, der quer zu einer Längserstreckung des ersten Scherenarms verschiebbar ist. Das Getriebe ist verhältnismäßig aufwendig. Seitlich von einer Symmetrieebene der Scherenarme wird durch den Antrieb und seinen Schlitten samt Schlittenführungskonsole viel Platz beansprucht. Meist ist der nicht direkt angetriebene Scherenarm noch durch eine pneumatische Kolben-Zylinder-Einheit beaufschlagt.

Aus der WO-A1-94/01371 ist eine gattungsmäßig andere Parallelschere an sich bekannt. Je ein Scherblatt ist an einem Schlitten befestigt. Die Schlitten sind durch einen gemeinsamen Kurbelantrieb linear hin und her antreibbar. Der Kurbelantrieb weist eine Kurbelwelle und daran diametral gegenüberliegend angelenkte Kurbelstangen auf, die jeweils am anderen Ende an einem der Schlitten angelenkt sind.

Aus der DE-A1-43 16 842 ist eine Schwenkschere an sich bekannt, deren beide Scherenarme jedoch an unterschiedlichen Achsen schwenkbar gelagert sind. Quer zu den Scherenarmen ist eine gemeinsame Zahnstange durch einen hydraulischen Antrieb hin und her bewegbar geführt. Mit der Zahnstange steht ein Antriebsritzel im Eingriff, mit dem zwei angetriebene Zahnräder eines Getriebekastens kämmen. An jedem angetriebenen Zahnrad ist ein Verbindungselement befestigt, das ein erstes Zwischengelenkstück trägt. An jedem ersten Zwischengelenkstück und an einem der Scherenarme ist ein zweites Zwischengelenkstück angelenkt.

Der Erfindung liegt die Aufgabe zugrunde, die Vorrichtung zu vereinfachen und die Kinematik der Schnittbewegungen zu verbessern.

Diese Aufgabe ist durch die Merkmale des Anspruchs 1 gelöst. Durch die koaxiale Lagerung der beiden Scherenarme entfällt der Abstand der beiden Lagerachsen bei dem bekannten Kopplungsgetriebe zwischen den Scherenarmen. Toleranzen und Spiel in dem bekannten Kopplungsgetriebe sind ausgeschaltet. Die Kinematik der Schnittbewegungen ist verbessert, weil beide Scherenarme jetzt um dieselbe Achse schwenken. Die Einzelantriebe für die Scherenarme gestatten es, jeden Antrieb kleiner und leichter auszubilden und besser unterbringen zu können.

Gemäß Anspruch 2 kann jeder Elektroservoantrieb außer einem Elektroservomotor bei Bedarf ein nachgeschaltetes Getriebe aufweisen. Beide Elektroservoantriebe sind vorzugsweise durch eine frei programmierbare elektronische Steuerung synchron steuerbar. Zur Synchronisierung der Vorrichtung können die Elektroservoantriebe in einer geöffneten Arbeitsstellung für eine Synchronisationsdauer zum Stillstand gebracht werden. Die Synchronisationsdauer kann sehr kurz bemessen sein.

Der wenigstens eine Schlitten gemäß Anspruch 3 bringt den besonderen Vorteil, daß man den Arbeitshub der Scherenarme minimal halten und dadurch einerseits Antriebsenergie sparen und andererseits die maximal mögliche Betriebsgeschwindigkeit steigern kann. Andererseits gestattet der Schlitten eine recht einfache und schnelle Öffnung der Scherenarme auch über die zum Arbeitshub gehörende geöffnete Arbeitsstellung hinaus. Diese weitere Öffnung ist z.B. dann wünschenswert, wenn Wartung oder Austausch an dem Tropfring der Speiserschüssel vorzunehmen sind. Der Tropfring und seine Umgebung können dann für Servicezwecke schnell und einfach frei zugänglich gemacht werden. Eine Öffnung der Scherenarme kann auch bei Ausfall der Antriebe oder der Antriebsenergie selbsttätig erfolgen. Dazu erteilt die Steuerung der Antriebe einer weiteren Steuerung für den Rückziehantrieb des Schlittens einen Startimpuls. Die Scherenarme bleiben dann in einer geöffneten Sicherheitsstellung, bis der Schaden an den Antrieben oder der Engergieversorgung behoben ist. Auf diese Weise können die Scherblätter nicht mit den Glassträngen kollidieren.

Gemäß Anspruch 4 ergibt sich eine besonders raumsparende Ausbildung der Vorrichtung.

Die Merkmale des Anspruchs 5 führen zu einem besonders günstigen Massenausgleich bei den bewegten Teilen der Vorrichtung.

Gemäß Anspruch 6 wird vorzugsweise eine pneumatische Kolben-Zylinder-Einheit eingesetzt, die zu einer schnellen und doch schonenden Betätigung der Mechanismen führt.

Merkmale und Vorteile der Erfindung werden nachfolgend anhand eines in den Zeichnungen dargestellten Ausführungsbeispiels näher erläutert. Es zeigt:
Fig. 1 die Draufsicht auf eine Vorrichtung, deren Scherenarme sich in der geöffneten Arbeitsstellung befinden, und
Fig. 2 die Draufsicht gemäß Fig. 1, jedoch mit den Scherenarmen in der weiter geöffneten Servicestellung.

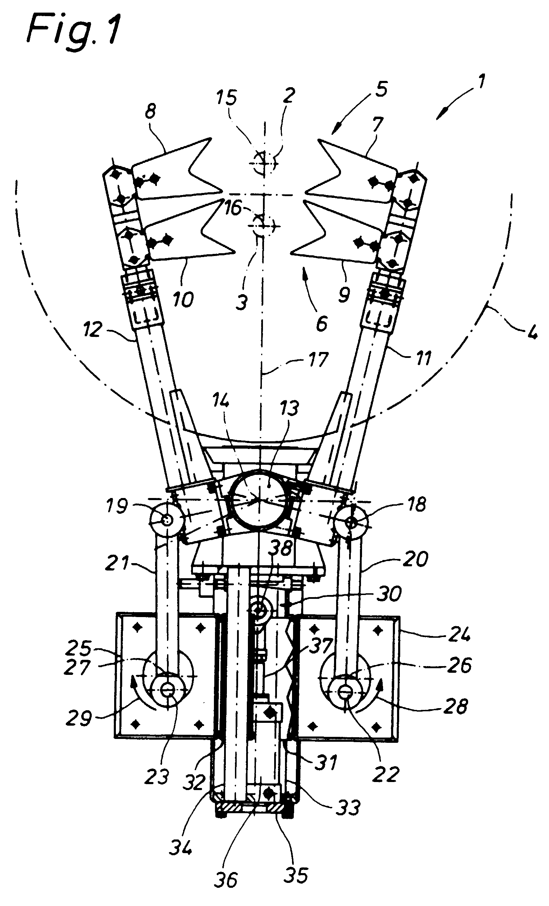

Fig. 1 zeigt eine Vorrichtung 1 zum Abtrennen von Posten von Strängen 2 und 3 aus schmelzflüssigem Glas. Die Stränge 2, 3 treten aus Bodenöffnungen einer an sich bekannten Speiserschüssel 4 aus. Das Abtrennen jedes Postens erfolgt durch ein Scherblattpaar 5 und 6 mit Scherblättern 7, 8 und 9, 10.

Je ein Scherblatt jedes Scherblattpaars 5, 6 ist an einem zugehörigen Scherenarm 11 und 12 lösbar befestigt. Die Scherenarme 11, 12 sind an einer gemeinsamen Säule 13 mit einer Längsachse 14 koaxial zueinander frei schwenkbar gelagert. Die Stränge 2, 3 weisen Längsachsen 15 und 16 auf. Durch die Längsachsen 14 bis 16 erstreckt sich eine Ebene 17.

In einem radialen Abstand von der Längsachse 14 ist an jedem Scherenarm 11, 12 an einem Anlenkpunkt 18 und 19 eine Koppelstange 20 und 21 angelenkt, deren anderes Ende jeweils an einen Kurbelzapfen 22 und 23 einer Abtriebskurbel eines als Elektroservoantrieb ausgebildeten Antriebs 24 und 25 mit Längsachsen 26 und 27 angeschlossen ist. Vorteilhaft ist, daß die Kurbelzapfen 22, 23 in stets gleichbleibender Drehrichtung 28 und 29 umlaufen. Zur Synchronisierung der Vorrichtung 1 werden die Kurbelzapfen 22, 23 zweckmäßigerweise in der in Fig. 1 gezeichneten äußeren Totpunktstellung kurzzeitig im Stillstand angehalten.

In dieser äußeren Totpunktstellung gemäß Fig. 1 befinden sich die Scherblätter 7 bis 10 jeweils in ihrer geöffneten Arbeitsstellung und damit im größten Arbeitsabstand von der zugehörigen Längsachse 15, 16. Wenn die Kurbelzapfen 22, 23 aus der äußeren Totpunktstellung anlaufen und in den Drehrichtungen 28, 29 umlaufen, schließen sich die Scherblattpaare 5, 6 mit leichter Oberlappung der zusammengehörenden Scherblätter 7, 8 und 9, 10, wodurch von den Strängen 2, 3 des schmelzflüssigen Glases jeweils ein Posten abgetrennt und einer zugehörigen Glasformmaschine zugeführt wird. Die Größe dieser Überlappung, des sogenannten Überschnitts der Scherblätter, kann durch einen als quer verstellbare schiefe Ebene eines vorrichtungsfesten Gehäuses 35 ausgebildeten Anschlag für das der Säule 13 zugewandten Ende eines Schlittens 30 einstellbar sein.

Die Antriebe 24, 25 sind auf gegenüberliegenden Seiten der Ebene 17 an einem gemeinsamen Schlitten 30 angeordnet, der über Führungen 31 und 32 an Führungsstangen 33 und 34 parallel zu der Ebene 17 bewegbar ist. Die Führungsstangen 33, 34 sind in dem vorrichtungsfesten Gehäuse 35 gehalten, in dessen Ende ein doppeltwirkender Pneumatikzylinder 36 montiert ist. Eine Kolbenstange 37 des Zylinders 36 ist in einem Anlenkpunkt 38 an dem Schlitten 30 zentral angelenkt. Eine Beaufschlagung des Zylinders 36 mit Druckluft hat daher eine Verschiebung des Schlittens 30 und damit der Antriebe 24, 25 parallel zu der Ebene 17 zur Folge.

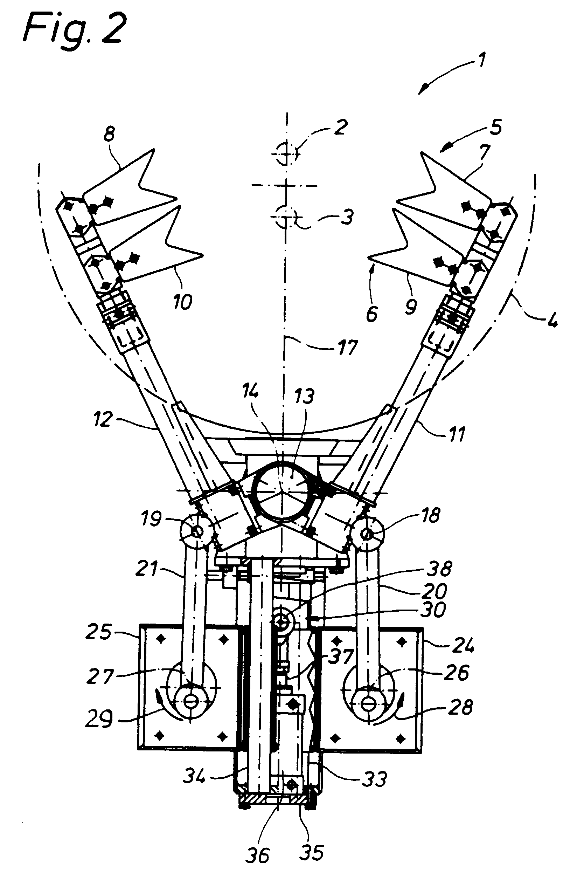

Wenn, ausgehend von der in Fig. 1 gezeigten geöffneten Arbeitsstellung der Scherenarme 11, 12, eine noch weitere Entfernung der Scherblätter 7 bis 10 voneinander gewünscht wird, z.B. um Arbeiten an den Tropfenauslässen oder sonstigen Teilen der Speiserschüssel 4 vorzunehmen, wird gemäß Fig. 2 die Kolbenstange 37 in den Zylinder 36 eingezogen und dadurch der Schlitten 30 in Fig. 2 nach unten verfahren. Mit dem Schlitten 30 bewegen sich die daran fest montierten Antriebe 24, 25 in Fig. 2 bis in die dort gezeichnete untere Endstellung, in der sich die Scherenarme 11, 12 in einer maximal geöffneten Servicestellung befinden. Die maximale Entfernung der Scherblätter 7 bis 10 voneinander wird naturgemäß dann erreicht, wenn die Kurbelzapfen 22, 23 ihre in Fig. 1 gezeichnete äußere Totpunktstellung auch während der Verschiebung des Schlittens 30 nach unten beibehalten, so wie dies in Fig. 2 gezeichnet ist.

Sind die erforderlichen Arbeiten an der Vorrichtung 1 abgeschlossen, wird, ausgehend von der Situation in Fig. 2, die Kolbenstange 37 wieder aus dem Zylinder 36 ausgefahren und dadurch der Schlitten 30 wieder in seine obere Endstellung gemäß Fig. 1 gefahren. Dadurch nehmen die Scherenarme 11, 12 wieder die in Fig. 1 gezeichnete geöffnete Arbeitsstellung ein.

Ähnliche Abläufe gelten für die vorerwähnte geöffnete Sicherheitsstellung der Scherenarme 11, 12.

## Patentansprüche

1. Vorrichtung (1) zum Abtrennen von Posten von einem oder mehreren Strängen (2;3) aus schmelzflüssigem Glas,
bei der das Abtrennen jedes Postens durch ein Scherblattpaar (5;6) erfolgt,
wobei ein Scherblatt (7,8;9,10) jedes Scherblattpaars (5;6) an einem zugehörigen, schwenkbar gelagerten Scherenarm (11;12) angeordnet ist,
und wobei die beiden Scherenarme (11;12) durch eine Antriebseinrichtung (24;25) synchron zueinander und voneinander schwenkend antreibbar sind,
dadurch gekennzeichnet, daß beide Scherenarme (11;12) an einer gemeinsamen Säule (13) der Vorrichtung (1) koaxial zueinander frei schwenkbar gelagert sind,
und daß jeder Scherenarm (11;12) durch einen eigenen, gesonderten Antrieb (24;25) der Antriebseinrichtung schwenkend antreibbar ist.

2. Vorrichtung nach Anspruch 1, dadurch gekennzeichnet, daß jeder Antrieb (24;25) als Elektroservoantrieb mit einer Abtriebskurbel ausgebildet ist und daß einerseits an einem Kurbelzapfen (22;23) jeder Abtriebskurbel und andererseits an dem zugehörigen Scherenarm (11;12) im Abstand von der Längsachse (14) der Säule (13) eine Koppelstange (20;21) angelenkt ist.

3. Vorrichtung nach Anspruch 1 oder 2, dadurch gekennzeichnet, daß die Antriebe (24;25) auf wenigstens einem Schlitten (30) angeordnet sind,
und daß der wenigstens eine Schlitten (30) zur Erzielung einer Relativschwenkung zwischen den Scherenarmen (11;12) verschiebbar ist.

4. Vorrichtung nach Anspruch 3, dadurch gekennzeichnet, daß der wenigstens eine Schlitten (30) parallel zu einer durch die Längsachse (14) der Säule (13) und durch die Längsachse (15;16) wenigstens eines Stranges (2;3) verlaufenden Ebene (17) verschiebbar ist.

5. Vorrichtung nach Anspruch 4, dadurch gekennzeichnet, daß je einer der Antriebe (24;25) auf gegenüberliegenden Seiten der Ebene (17) an einem gemeinsamen Schlitten (30) angeordnet sind.

6. Vorrichtung nach einem der Ansprüche 3 bis 5, dadurch gekennzeichnet, daß jeder Schlitten (30) durch wenigstens eine Kolben-Zylinder-Einheit (36,37) verschiebbar ist, die einerseits an dem Schlitten (30) und andererseits vorrichtungsfest angeschlossen ist.

## Claims

1. Apparatus (1) for cutting off gobs from one or more strands (2; 3) of molten glass,
in which the cutting off of each gob is effected by a pair of shear blades (5; 6),
wherein a shear blade (7, 8; 9,10) of each shear blade pair (5; 6) is arranged on an associated, pivotably mounted shear arm (11; 12),
and wherein the two shear arms (11; 12) are pivotably drivable synchronously towards one another and away from one another by a drive device (24; 25),
characterised in that both shear arms (11; 12) are freely pivotably mounted coaxially in relation to each other on a common column (13) of the apparatus (1),
and that each shear arm (11; 12) is pivotably drivable by an individual, separate drive (24; 25) of the drive device.

2. Apparatus according to claim 1, characterised in that each drive (24; 25) is formed as an electric servo drive with a take-off crank, and that a coupling rod (20; 21) is connected on the one hand to a crank pin (22; 23) of each take-off crank and on the other hand to the associated shear arm (11; 12) at a distance from the longitudinal axis (14) of the column (13).

3. Apparatus according to claim 1 or 2, characterised in that the drives (24; 25) are arranged on at least one carriage (30),
and that said at least one carriage (30) is displaceable in order to achieve a relative pivotal movement between the shear arms (11; 12).

4. Apparatus according to claim 3, characterised in that said at least one carriage (30) is displaceable parallel to a plane (17) extending through the longitudinal axis (14) of the column (13) and through the longitudinal axis (15; 16) of at least one strand (2; 3).

5. Apparatus according to claim 4, characterised in that each one of the drives (24; 25) is arranged on opposite sides of the plane (17) on a common carriage (30).

6. Apparatus according to one of claims 3 to 5, characterised in that each carriage (30) is displaceable by at least one piston-cylinder unit (36, 37) which is connected on the one hand to the carriage (30) and on the other hand fixedly to the apparatus.

## Revendications

1. Dispositif (1) destiné au sectionnement de paraisons à partir d'un ou de plusieurs joncs (2 ; 3) de verre en fusion,
dans lequel le sectionnement de chaque paraison est effectué par un couple de lames de cisaillement (5 ; 6),
une lame de cisaillement (7, 8 ; 9, 10) de chaque couple (5 ; 6) de lames de cisaillement étant disposée sur un bras (11 ; 12) associé de la cisaille, qui est monté de façon à pouvoir pivoter, et
les deux bras (11 ; 12) de la cisaille pouvant être entraînés en pivotement de façon synchrone l'un vers l'autre et écartés l'un de l'autre par un dispositif d'entraînement (24 ; 25),
caractérisé en ce que les deux bras (11 ; 12) de la cisaille sont montés sur une colonne commune (13) du dispositif (1) de façon à pouvoir librement pivoter coaxialement l'un par rapport à l'autre, et
en ce que chaque bras (11 ; 12) de la cisaille peut être entraîné en pivotement par un entraînement (24 ; 25) particulier, qui lui est propre, du dispositif d'entraînement.

2. Dispositif selon la revendication 1, caractérisé en ce que chaque entraînement (24 ; 25) est réalisé en tant que servocommande électrique comportant une manivelle de sortie, et en ce qu'une tige de couplage (20 ; 21) est articulée à une certaine distance de l'axe longitudinal (14) de la colonne (13), d'une part sur un maneton (22 ; 23) de manivelle de chaque manivelle de sortie, et d'autre part sur le bras (11 ; 12) associé de la cisaille.

3. Dispositif selon la revendication 1 ou 2, caractérisé en ce que les entraînements (24 ; 25) sont disposés sur au moins un coulisseau (30), et en ce que ledit au moins un coulisseau (30) peut être déplacé afin de générer un pivotement relatif entre les bras (11 ; 12) de la cisaille.

4. Dispositif selon la revendication 3, caractérisé en ce que ledit au moins un coulisseau (30) peut être déplacé parallèlement à un plan (17) qui passe par l'axe longitudinal (14) de la colonne (13) et par l'axe longitudinal (15 ; 16) d'au moins un jonc (2 ; 3).

5. Dispositif selon la revendication 4, caractérisé en ce que les entraînements (24 ; 25) sont disposés sur des côtés opposés du plan (17) sur un coulisseau commun (30).

6. Dispositif selon l'une quelconque des revendications 3 à 5, caractérisé en ce que chaque coulisseau (30) peut être déplacé par au moins un vérin (36, 37) qui est raccordé, d'une part au coulisseau (30) et d'autre part solidairement au dispositif.
